# FASCICULE DE BREVET EUROPEEN

(11) **EP 4 328 120 B1**
(45) Date de publication et mention de la délivrance du brevet: **07.08.2024**
(21) Numéro de dépôt: 23193409.2
(22) Date de dépôt: 25.08.2023
(51) Int. Cl.: B62D 35/00

(54) **CARROSSERIE DE VEHICULE ROUTIER DE TRANSPORT DE MARCHANDISES MUNIE DE DEFLECTEURS ARRIERE**
STRASSENFAHRZEUGKAROSSERIE ZUM TRANSPORT VON GÜTERN MIT HECKSPOILERN
BODY OF A ROAD VEHICLE FOR TRANSPORTING GOODS PROVIDED WITH REAR DEFLECTORS

(30) Priorité: 25.08.2022 FR 2208525
(43) Date de publication de la demande: 28.02.2024
(73) Titulaire: Jean Chereau SAS, 50220 Ducey (FR)
(72) Inventeur: RENOUF, Gildas, 50370 LE GRAND-CELLAND (FR)
(74) Mandataire: Casalonga

(56) Documents cités:
- EP-B1- 3 650 322
- US-A1- 2013 076 063
- US-A1- 2016 304 138
- US-A1- 2019 176 906

## Description

La présente invention concerne le domaine des carrosseries destinées à être montées par exemple sur les châssis de véhicules routiers de transport de marchandises tels que des camions, des semi-remorques, des remorques ou des porteurs.

L'espace de chargement intérieur d'une carrosserie est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut par exemple comprendre deux portes arrière.

De sorte à réduire la traînée aérodynamique d'un véhicule routier de transport de marchandises et par conséquence sa consommation de carburant, il est connu d'équiper la carrosserie d'un ou de plusieurs déflecteurs aérodynamiques.

Une solution consiste par exemple à fixer sur le cadre arrière de la carrosserie deux déflecteurs latéraux qui prolongent chacun vers l'arrière un des flancs de la carrosserie.

Toutefois, selon la règlementation européenne actuellement en vigueur, ce type de déflecteurs aérodynamiques fixes, qui ne sont généralement ni escamotables ni rabattables, ne doit pas dépasser la longueur maximale autorisée pour la carrosserie de plus de vingt centimètres. Dès lors, lors du roulage, l'efficacité de tels déflecteurs arrière reste faible.

Par ailleurs, il arrive fréquemment que ces déflecteurs montés de façon fixe à l'arrière des flancs de la carrosserie subissent des chocs lors des mises à quai du véhicule.

Dans la pratique, ces déflecteurs latéraux arrière sont endommagés très rapidement. Ceci engendre des frais de réparation ou de changement des déflecteurs, mais surtout l'immobilisation du véhicule qui représente un coût particulièrement important.

Pour remédier à cet inconvénient, la demanderesse a développé un système d'accouplement de chaque déflecteur à la porte arrière associée pour son montage mobile entre une position rabattue contre ladite porte arrière et une position déployée d'utilisation. Le système d'accouplement est conçu pour obtenir un retour automatique du déflecteur dans sa position rabattue lorsque l'opérateur ouvre la porte arrière associée et l'amène contre le flanc adjacent de la carrosserie. Pour plus de détail, on pourra se référer au brevet EP-B 1-3 650 322.

Avec un tel système, lorsque la porte arrière est ramenée dans sa position de fermeture, l'opérateur doit cependant penser à manipuler le déflecteur pour le redéployer dans sa position d'utilisation afin de bénéficier à nouveau d'une traînée aérodynamique réduite lors du roulage. Dans le cas d'un oubli par l'opérateur du redéploiement du déflecteur, celui-ci est sans effet sur la traînée aérodynamique.

La présente invention vise à remédier à cet inconvénient.

L'invention a pour objet une carrosserie de véhicule routier de transport de marchandises comprenant deux flancs longitudinaux verticaux, un pavillon, et un plancher assemblés entre eux et délimitant en partie un espace de chargement intérieur, et un cadre arrière de renfort fixé au moins sur les flancs. Des montants verticaux dudit cadre arrière et lesdits flancs forment des parois latérales de la carrosserie.

La carrosserie comprend en outre deux portes arrière de fermeture d'un accès audit espace de chargement intérieur mobiles à rotation chacune sur le cadre arrière entre une position fermée et une position ouverte extrême dans laquelle elle s'étend vers l'avant en étant espacée transversalement d'un des flancs. La carrosserie comprend également deux déflecteurs montés chacun sur l'une des portes arrière.

Selon une caractéristique générale de la carrosserie, celle-ci comprend au moins un système d'accouplement de chaque déflecteur à la porte arrière associée pour le montage mobile dudit déflecteur entre une position rabattue contre ladite porte arrière et une position déployée pour prolonger vers l'arrière l'une des parois latérales de la carrosserie. Chaque système d'accouplement comprend au moins une première bielle articulée audit déflecteur et à ladite porte arrière, et une deuxième bielle articulée audit déflecteur et à ladite porte arrière. Alternativement, la deuxième bielle peut être articulée audit déflecteur et à ladite première bielle. Chaque système d'accouplement comprend également au moins un vérin d'actionnement articulé à ladite porte arrière et à l'une des première et deuxième bielles.

Selon une autre caractéristique générale, la carrosserie comprend en outre au moins un système de redéploiement automatique de chaque déflecteur qui est fixé sur ledit déflecteur, ou alternativement sur la porte arrière associée.

Chaque système de redéploiement comprend une embase fixée sur ledit déflecteur ou alternativement sur la porte arrière associée, une partie mobile articulée à rotation sur l'embase entre une position rabattue et une position déployée, et un ressort interposé entre l'embase et la partie mobile et exerçant un effort de précontrainte sur la partie mobile pour obtenir, en position rabattue dudit déflecteur contre la porte arrière associée et lors du mouvement de fermeture de la porte arrière associée à partir de sa position ouverte extrême, un déplacement dudit déflecteur relativement à la porte arrière associée jusqu'à une position déployée intermédiaire sous l'effet dudit effort de précontrainte et du déplacement, vers l'avant le long de la porte arrière associée ou alternativement dudit déflecteur, d'un contact entre la partie mobile du système de redéploiement et la porte arrière associée, ou alternativement ledit déflecteur.

Selon une autre caractéristique générale, le vérin d'actionnement de chaque système d'accouplement est articulé pour exercer, au moins à partir de la position déployée intermédiaire du déflecteur associé, un effort de poussée tendant à déplacer ledit déflecteur jusqu'à la position déployée.

Les sens « longitudinal » et « transversal » sont utilisés en considérant le sens de la longueur de la carrosserie.

Avec la carrosserie de l'invention, le mouvement de fermeture de la porte arrière à partir de sa position ouverte extrême provoque le redéploiement automatique du déflecteur sans action additionnelle de l'opérateur.

Dans un mode de réalisation, la partie mobile de chaque système de redéploiement automatique est articulée autour d'un axe d'articulation vertical.

Dans un autre mode de réalisation, la partie mobile de chaque système de redéploiement automatique est articulée autour d'un axe d'articulation horizontal.

Alternativement, il est également possible d'articuler la partie mobile de chaque système de redéploiement automatique autour d'un axe d'articulation incliné par rapport aux directions horizontale et verticale.

Avantageusement, la partie mobile de chaque système de redéploiement automatique est équipé d'au moins une roulette pour ledit contact avec la porte arrière associée ou ledit déflecteur.

La ou les roulettes de la partie mobile permettent d'éviter un endommagement de la porte arrière associée ou du déflecteur. Alternativement, il est possible de prévoir d'autres moyens pour limiter le frottement entre la partie mobile et la porte arrière associée ou ledit déflecteur. Il est par exemple possible de prévoir des patins ou bandes en caoutchouc, ou encore une bille.

Selon une conception particulière, le ressort de chaque système de redéploiement automatique est apte à exercer, dans la position rabattue dudit déflecteur contre la porte arrière associée elle-même dans sa position fermée, un effort de précontrainte permettant le déplacement dudit déflecteur relativement à la porte arrière associée jusqu'à la position déployée intermédiaire sous l'effet dudit effort de précontrainte et du déplacement, transversalement vers l'intérieur le long de la porte arrière associée ou dudit déflecteur, d'un contact entre la partie mobile du système de redéploiement et la porte arrière associée ou ledit déflecteur.

Selon cette conception particulière, le vérin d'actionnement de chaque système d'accouplement est articulé pour exercer, au moins à partir de la position déployée intermédiaire du déflecteur associé, un effort de poussée tendant à déplacer ledit déflecteur jusqu'à la position déployée.

Lorsque le système de redéploiement est actif, le déploiement du déflecteur est automatique et le déflecteur reste dans sa position déployée sans action de l'opérateur.

En position déployée dudit déflecteur, l'une des première et deuxième bielles dudit système d'accouplement peut être en appui contre une butée de la porte arrière associée, et le vérin d'actionnement exerce un effort de poussée tendant à maintenir ledit déflecteur dans ladite position déployée.

Avantageusement, le système de redéploiement automatique comprend en outre un organe de verrouillage à actionnement manuel apte à coopérer avec les parties fixe et mobile dans la position rabattue de ladite partie mobile pour le verrouillage dudit système. Cela permet de pouvoir rendre inactif le système de redéploiement.

Selon une conception particulière, lesdites première et deuxième bielles de chaque système d'accouplement sont articulées pour obtenir, en position déployée du déflecteur associé et lors du mouvement d'ouverture de la porte arrière associée vers sa position ouverte extrême, un déplacement dudit déflecteur relativement à la porte arrière associée vers sa position rabattue sous l'effet du déplacement, vers l'avant le long d'une des parois latérales de la carrosserie, d'un contact entre ledit déflecteur et ladite paroi latérale.

La cinématique de déplacement de chaque déflecteur permet à l'opérateur, par exemple avant la mise à quai, d'ouvrir la porte arrière associée à ce déflecteur vers la position ouverte extrême sans avoir au préalable à le rabattre contre la porte arrière.

Selon une première conception, lesdites première et deuxième bielles de chaque système d'accouplement sont articulées pour obtenir, en position déployée du déflecteur associé et lors du mouvement d'ouverture de la porte arrière associée vers sa position ouverte extrême, un contact entre ledit déflecteur et ladite paroi latérale, et lors de la poursuite dudit mouvement d'ouverture après contact, le déplacement dudit contact vers l'avant le long de ladite paroi latérale.

Selon une deuxième conception, lesdites première et deuxième bielles de chaque système d'accouplement sont articulées pour obtenir, en position déployée du déflecteur associé, un contact entre ledit déflecteur et ladite paroi latérale, et lors du mouvement d'ouverture de la porte arrière associée vers sa position ouverte extrême le déplacement dudit contact vers l'avant le long de ladite paroi latérale.

De préférence, chaque déflecteur est équipé d'au moins une roulette pour ledit contact avec ladite paroi latérale.

La ou les roulettes de chaque déflecteur permettent d'éviter un endommagement du déflecteur ou de ladite paroi latérale de la carrosserie.

Alternativement, il est possible de prévoir d'autres moyens pour limiter le frottement entre le déflecteur et ladite paroi latérale de la carrosserie. Il est par exemple possible de prévoir des patins ou bandes en caoutchouc fixés sur le bord avant du déflecteur et/ou sur le flanc de la carrosserie.

Par « bord avant du déflecteur », on entend le bord vertical du déflecteur qui est orienté vers l'avant de la carrosserie dans la position déployée dudit déflecteur.

Chaque porte arrière peut être montée mobile à rotation sur un des montants verticaux du cadre arrière, et le déflecteur associé à ladite porte peut être décalé vers l'arrière par rapport audit montant vertical dans la position déployée dudit déflecteur.

Dans un mode de réalisation particulier, dans la position fermée des portes arrière et dans sa position rabattue, chaque déflecteur est en retrait vers l'avant par rapport à un bord d'extrémité arrière du cadre arrière ou affleure avec ledit bord d'extrémité arrière.

Par « bord d'extrémité arrière » du cadre arrière, on entend le bord du cadre arrière qui est situé le plus en arrière de la carrosserie. Ce bord d'extrémité arrière peut par exemple être le bord arrière d'une traverse supérieure ou inférieure du cadre arrière ou d'un des montants verticaux de ce cadre arrière, ou encore être le bord arrière d'un ou de butoirs amortisseurs fixés sur ce cadre arrière. De tels butoirs amortisseurs sont prévus pour venir en appui contre les quais de chargement lors de l'accostage du véhicule et peuvent par exemple être réalisés en caoutchouc. Ces butoirs amortisseurs peuvent par exemple être fixés sur la traverse supérieure du cadre arrière, et/ou sur la traverse inférieure et/ou sur les montants verticaux du cadre.

Ainsi, dans sa position rabattue, le déflecteur ne s'étend pas en saillie vers l'arrière par rapport au cadre arrière équipé ou non de butoirs amortisseurs. On limite donc le risque de détériorations du déflecteur dans sa position rabattue.

Selon une conception particulière, chaque porte arrière comprend au moins un insert rapporté pour le montage mobile à rotation de ladite porte sur le cadre arrière, ledit système d'accouplement associé à ladite porte comprenant une platine de support fixée sur ledit insert et sur laquelle est articulée au moins ladite première bielle.

En variante, il reste cependant possible de prévoir un montage de la platine de support du système d'accouplement sur la porte arrière dans une zone distincte de l'insert prévu pour le montage à rotation de la porte arrière.

La présente invention sera mieux comprise à la lecture de la description détaillée d'un mode de réalisation pris à titre d'exemple nullement limitatif et illustré par les dessins annexés sur lesquels :
[Fig 1] est une vue en perspective d'une carrosserie montée sur un châssis de véhicule routier de transport de marchandises selon un exemple de réalisation et équipée de déflecteurs arrière dans une position rabattue,
[Fig 2] est une vue de détail de la figure 1,
[Fig 3] est une vue de détail de la carrosserie de la figure 1 dans une position déployée des déflecteurs arrière,
[Fig 4] est une vue de détail de la figure 3,
[Fig 5] est une vue en perspective d'un système de redéploiement automatique d'un des déflecteurs arrière,
[Fig 6]
[Fig 7]
[Fig 8]

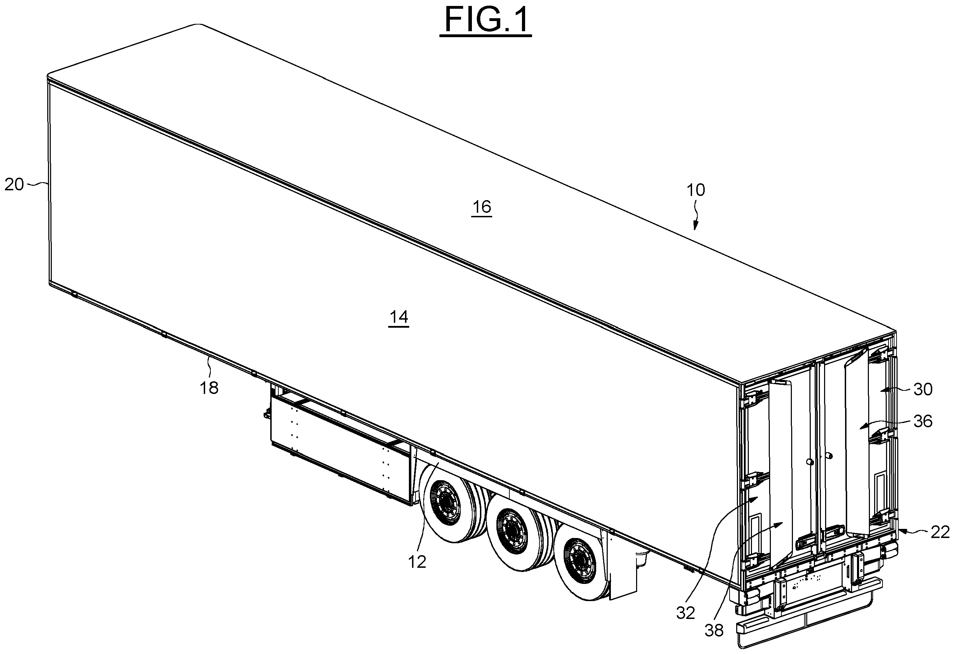

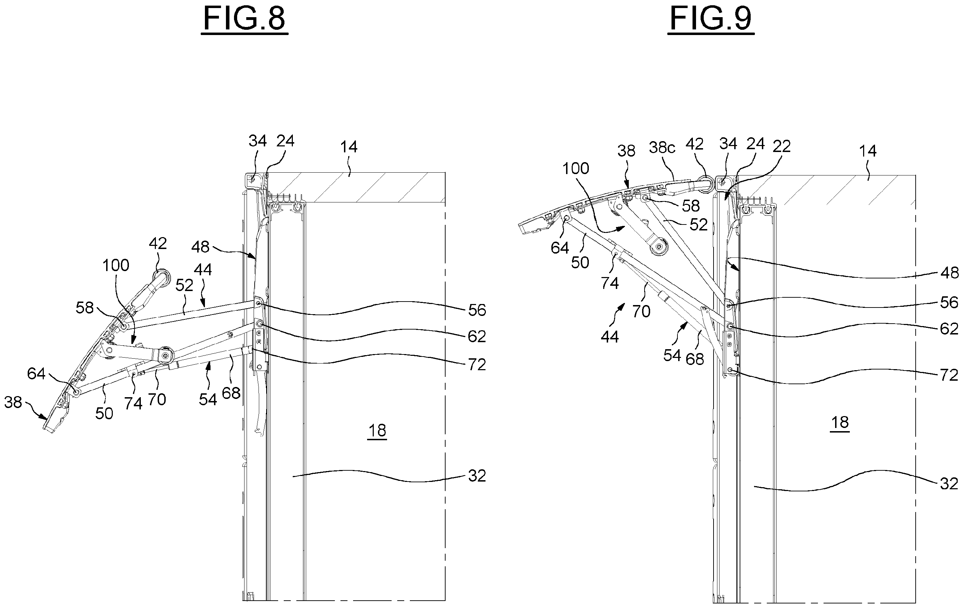

[Fig 9] sont des vues en coupe partielle de la carrosserie de la figure 1 illustrant le passage d'un des déflecteurs arrière de sa position rabattue à sa position déployée dans une position fermée de la porte arrière associée,
[Fig 10]
[Fig 11]
[Fig 12]
[Fig 13]
[Fig 14]

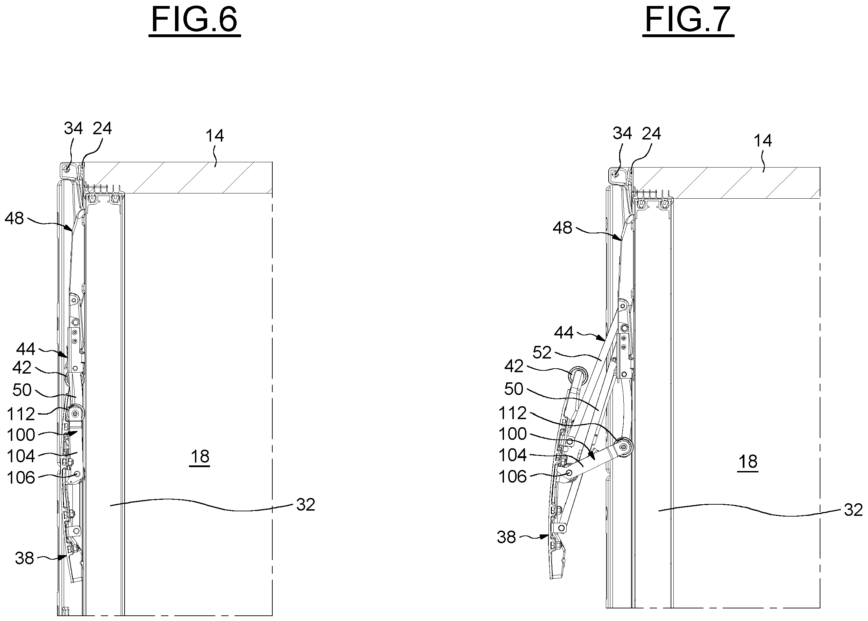

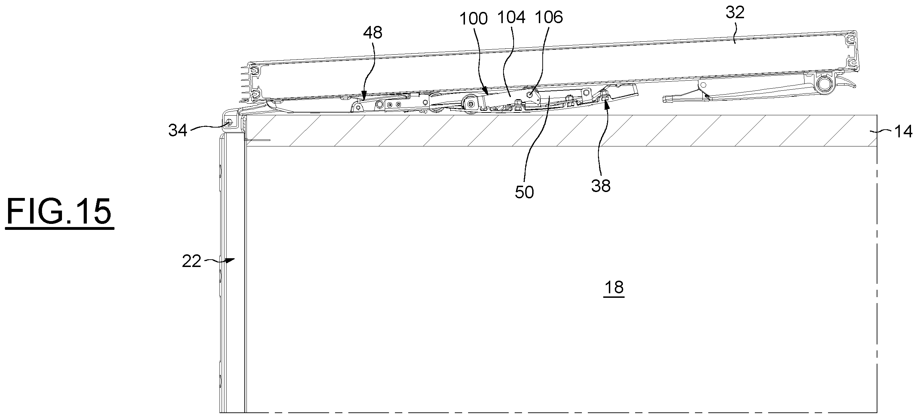

[Fig 15] sont des vues en coupe partielle de la carrosserie de la figure 1 illustrant le mouvement d'ouverture de la porte arrière représentée en figures 6 à 9 équipée d'un des déflecteurs arrière et le déplacement du déflecteur arrière dans sa position rabattue provoqué par ce mouvement d'ouverture, et
[Fig 16]
[Fig 17]
[Fig 18]
[Fig 19]
[Fig 20]

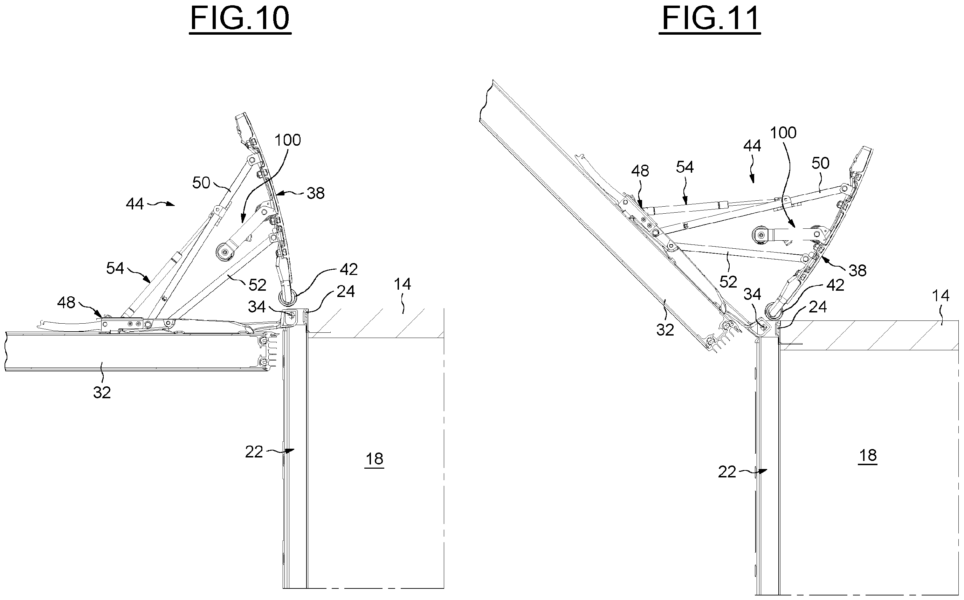

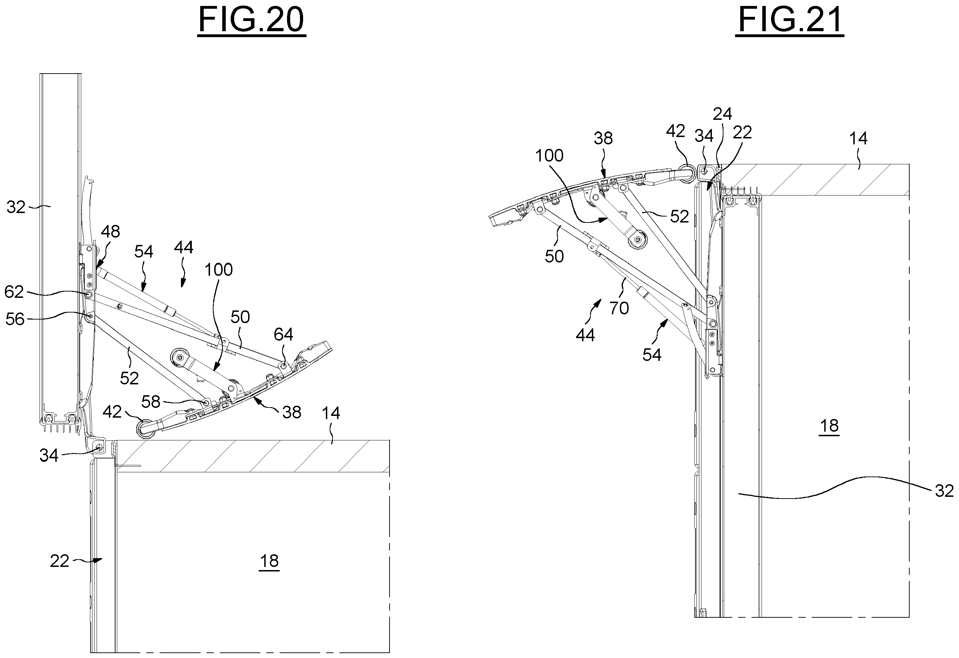

[Fig 21] sont des vues en coupe partielle de la carrosserie de la figure 1 illustrant partiellement le mouvement de fermeture de la porte arrière représentée en figures 10 à 15 et le redéploiement automatique du déflecteur arrière provoqué par ce mouvement de fermeture.

Sur la figure 1, on a représenté une carrosserie, référencée 10 dans son ensemble, montée sur un châssis 12 de véhicule de transport routier s'étendant longitudinalement et soutenu par des roues.

Comme illustré à la figure 1, la carrosserie 10 comprend deux flancs 14 verticaux opposés s'étendant longitudinalement (un seul étant visible sur la figure), un plafond ou pavillon 16, un plancher 18, et une face avant 20 qui sont assemblés entre eux pour délimiter un espace de chargement intérieur.

La carrosserie 10 comprend également un cadre arrière 22, nommé aussi custode, ayant une fonction de rigidification de la carrosserie. Le cadre arrière 22 rigide est fixé sur les extrémités arrière des flancs 14, du pavillon 16 et du plancher 18.

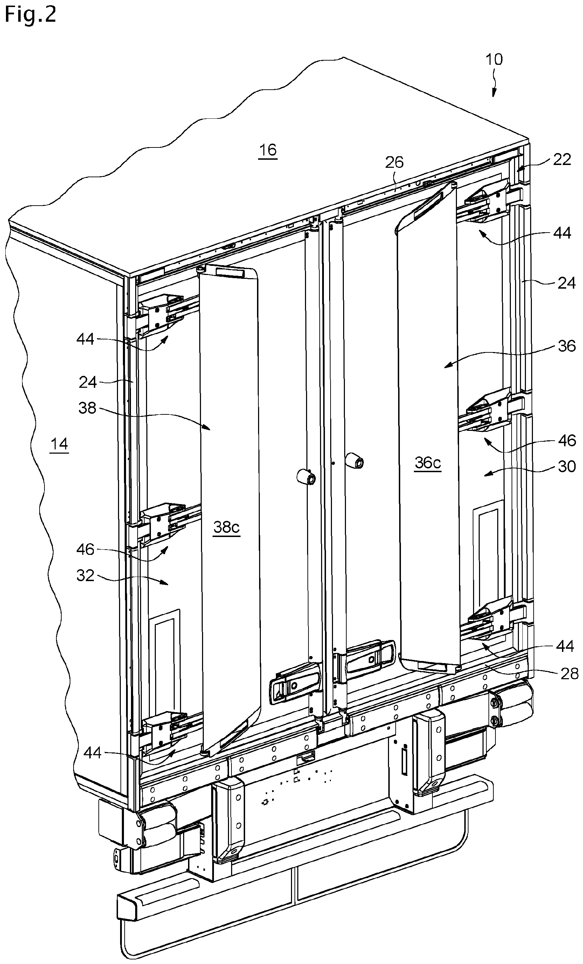

Comme illustré plus visiblement à la figure 2, le cadre arrière 22 comprend deux montants verticaux 24, une traverse supérieure 26 reliant les extrémités supérieures des montants verticaux 24, et une traverse inférieure 28 formant seuil reliant les extrémités inférieures des montants verticaux 24. Le cadre arrière 22 peut par exemple être réalisé en acier, notamment en acier inoxydable. Chaque montant vertical 24 du cadre arrière et le flanc 14 associé forment une paroi latérale de la carrosserie. La carrosserie comprend donc deux parois latérales opposées s'étendant longitudinalement.

La carrosserie 10 comprend également deux portes arrière 30, 32 articulées chacune à rotation sur le cadre arrière 22. Les portes arrière 30, 32 forment respectivement des portes arrière droite et gauche. Chaque porte arrière 30, 32 est articulée sur un des montants verticaux 24 du cadre arrière autour d'axes d'articulation verticaux. Sur les figures, seul l'axe 34 d'articulation de la porte arrière 32 est visible (figures 6 à 21).

Chaque porte arrière 30, 32 est mobile entre une position de fermeture d'une ouverture ou accès arrière à l'espace de chargement intérieur illustrée à la figure 2, et une pluralité de positions d'ouverture. Chaque porte arrière 30, 32 est mobile jusqu'à une position ouverte extrême dans laquelle elle s'étend vers l'avant en étant espacée transversalement d'un des flancs 14. Dans cette position ouverte extrême, chaque porte arrière 30, 32 est généralement rabattue contre le flanc 14 associé. Dans l'exemple de réalisation illustré, dans sa position rabattue, chaque porte arrière 30, 32 vient en butée contre ledit flanc 14 associé par l'intermédiaire d'un bloc en caoutchouc (non référencé). Alternativement, il reste possible de prévoir d'autres moyens pour bloquer le pivotement de chaque porte arrière 30, 32 vers le flanc 14 associé dans sa position ouverte extrême.

La carrosserie 10 comprend également deux volets ou déflecteurs 36, 38 arrière aérodynamiques qui sont montés respectivement sur les portes arrière 30, 32. Les déflecteurs 36, 38 forment respectivement des déflecteurs arrière droite et gauche. Les déflecteurs 36, 38 sont identiques entre eux.

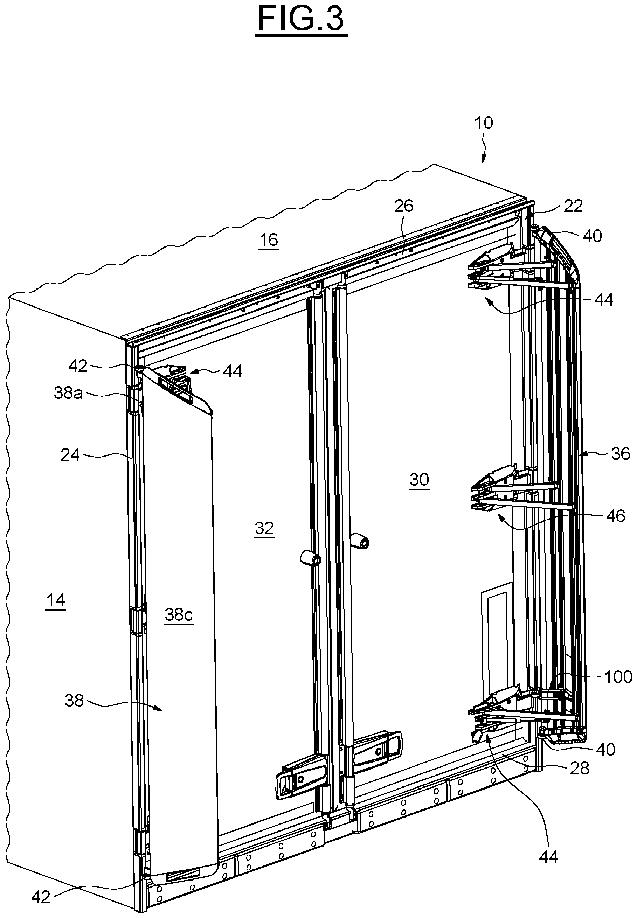

Chaque déflecteur 36, 38 est mobile relativement à la porte arrière 30, 32 associée entre une position rabattue contre cette porte (figure 2), et une position déployée pour prolonger vers l'arrière l'un des flancs 14 et le montant vertical 24 associé du cadre arrière (figure 3). Les positions rabattue et déployée de chaque déflecteur 36, 38 constituent les positions extrêmes de déplacement dudit déflecteur relativement à la porte arrière 30, 32 associée.

Comme cela sera décrit plus en détail par la suite, dans la position déployée de chaque déflecteur 36 et 38, le mouvement d'ouverture de la porte arrière 30, 32 correspondante provoque le déplacement du déflecteur jusque dans sa position rabattue.

Comme cela sera également décrit plus en détail par la suite, dans la position rabattue de chaque déflecteur 36, 38 contre la porte arrière 30, 32 associée, le mouvement de fermeture de chaque porte arrière associée à partir de sa position ouverte extrême provoque le redéploiement automatique du déflecteur.

Chaque déflecteur 36, 38 s'étend sur la majeure partie de la hauteur de la porte arrière 30, 32 associée. A titre indicatif, les déflecteurs 36, 38 peuvent présenter une hauteur comprise entre 200 cm et 300 cm, et de préférence entre 220 cm et 280 cm. Il est bien entendu possible de prévoir des déflecteurs de hauteur différente. A titre indicatif, les déflecteurs 36, 38 peuvent par exemple présenter une dimension longitudinale comprise entre 20 cm et 50 cm, notamment entre 35 cm et 50 cm, et de préférence égale à 40 cm. Il est là aussi possible de prévoir des déflecteurs avec des dimensions longitudinales différentes, par exemple selon les règlementations en vigueur.

Chaque déflecteur 36, 38 se présente sous la forme d'un panneau. Chaque déflecteur 36, 38 est réalisé ici par assemblage de plusieurs pièces. En variante, il est possible de prévoir des déflecteurs réalisés chacun en une seule pièce.

Les deux déflecteurs 36, 38 étant identiques, on décrira uniquement le déflecteur 36 en utilisant les références "a", "b", "c " et "d", étant entendu que les éléments identiques du déflecteur 38 portent les mêmes références.

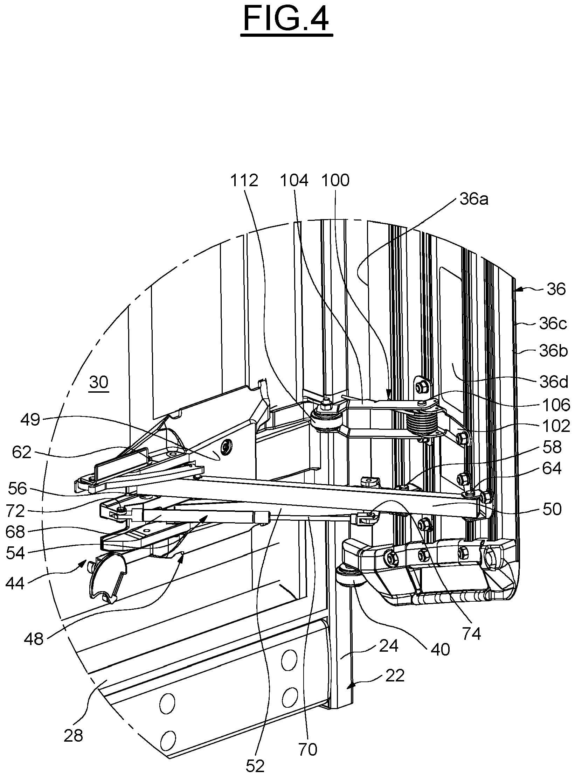

En se référant à la figure 4, le déflecteur 36 présente un bord avant 36a vertical et un bord arrière 36b vertical de fuite opposé dans le sens longitudinal. Les termes « avant » et « arrière » sont donnés en prenant en considération la position déployée du déflecteur. Le déflecteur 36 présente également une face extérieure 36c et une face intérieure 36d opposée. Les faces extérieure 36c et intérieure 36d relient les bords avant 36a et arrière 36b.

Dans l'exemple de réalisation illustré, chaque déflecteur 36, 38 comprend une paire de roulettes 40, 42 (figures 3 et 4) inférieure et supérieure disposées en saillie par rapport au bord avant 36a, 38a dudit déflecteur. Chaque roulette 40, 42 est montée libre à rotation autour d'un axe vertical (non référencé). Chaque roulette 40, 42 de la paire de roulettes est montée à une extrémité verticale du déflecteur associé.

Comme cela est notamment visible aux figures 2 et 3, la carrosserie 10 comprend encore une pluralité de systèmes d'accouplement 44, 46 associés à chaque déflecteur 36, 38 pour son montage mobile relativement à la porte arrière 30, 32 associée entre la position rabattue et la position déployée.

Dans l'exemple de réalisation illustré, à chaque déflecteur 36 et 38, il est associé deux systèmes d'accouplement 44 supérieur et inférieur et un système d'accouplement 46 intermédiaire disposé entre ces systèmes d'accouplement 44. Les systèmes d'accouplement 44 supérieur et inférieur sont identiques entre eux.

En se référant de nouveau à la figure 4, chacun des systèmes d'accouplement 44 du déflecteur 36 comprend une platine 48 de support fixée sur la face extérieure de la porte arrière 30, des première et deuxième bielles 50, 52 d'articulation, et un vérin d'actionnement 54 agissant sur la bielle 50.

Dans l'exemple de réalisation illustré, la platine 48 de support est fixée sur un des inserts 49 rapportés sur la face extérieure de la porte arrière 30 pour former une partie de la charnière assurant son articulation par rapport au montant vertical 24 du cadre arrière.

Une première extrémité de la bielle 52 est articulée sur la platine 48 autour d'un axe d'articulation 56 vertical. Une deuxième extrémité opposée de la bielle 52 est articulée sur le déflecteur 36 autour d'un axe d'articulation 58 vertical. La deuxième extrémité de la bielle 52 est articulée sur le déflecteur 36 par l'intermédiaire d'une platine (non référencée) fixée sur la face intérieure 36d dudit déflecteur.

De façon analogue, une première extrémité de la bielle 50 est articulée sur la platine 48 autour d'un axe d'articulation 62 vertical. Une deuxième extrémité opposée de la bielle 50 est articulée sur le déflecteur 36 autour d'un axe d'articulation 64 vertical. La deuxième extrémité de la bielle 50 est articulée sur le déflecteur 36 par l'intermédiaire d'une platine (non référencée). La platine 48 permet l'articulation des bielles 50, 52 relativement à la porte arrière 30 et les platines (non référencées) permettent l'articulation des bielles 52, 50 relativement au déflecteur 36.

La bielle 52 est articulée sur la face intérieure 36d du déflecteur 36 du côté du bord avant 36a et la bielle 50 est articulée sur cette face intérieure 36d du côté du bord arrière 36b. La bielle 52 est articulée sur la platine 48 en étant décalée vers l'extérieur par rapport à la bielle 50. Les bielles 50, 52 sont disposées verticalement l'une en dessous de l'autre. La bielle 50 présente une longueur supérieure à celle de la bielle 52. Les axes d'articulation 56, 58 et 62, 64 des bielles sont distincts les uns des autres et s'étendent parallèlement entre eux.

Le vérin d'actionnement 54 comprend un corps 68 articulé sur la porte arrière 30 par l'intermédiaire de la platine 48, et une tige 70 coulissante par rapport au corps 68 et articulée sur la bielle 50. La tige 70 est articulée sur la bielle 50 par l'intermédiaire d'une platine (non référencée) fixée sur cette bielle. Le corps 68 et la tige 70 du vérin d'actionnement sont respectivement articulés à rotation autour d'axes d'articulation 72, 74 verticaux. Les axes d'articulation 72, 74 sont distincts des axes d'articulation 56, 58 et 62, 64 des bielles. Le vérin d'actionnement 54 est par exemple du type pneumatique, ou hydraulique ou encore mécanique comprenant un ressort à l'intérieur d'une cage.

Dans l'exemple de réalisation illustré, le système d'accouplement 46 diffère du système d'accouplement 44 uniquement en ce qu'il ne comporte pas de vérin d'actionnement. Alternativement, il est possible de prévoir un système d'accouplement 46 équipé aussi d'un vérin.

Comme cela est notamment visible aux figures 3 et 4, la carrosserie 10 comprend encore un système 100 de redéploiement automatique associé à chaque déflecteur 36, 38.

Dans l'exemple de réalisation illustré, à chaque déflecteur 36 et 38, il est associé un unique système 100 de redéploiement automatique qui est disposé au voisinage du système d'accouplement 44 inférieur. En variante, il est possible de prévoir une autre disposition du système 100. Il est également possible de prévoir plusieurs systèmes 100 de redéploiement automatique associés à chaque déflecteur 36, 38.

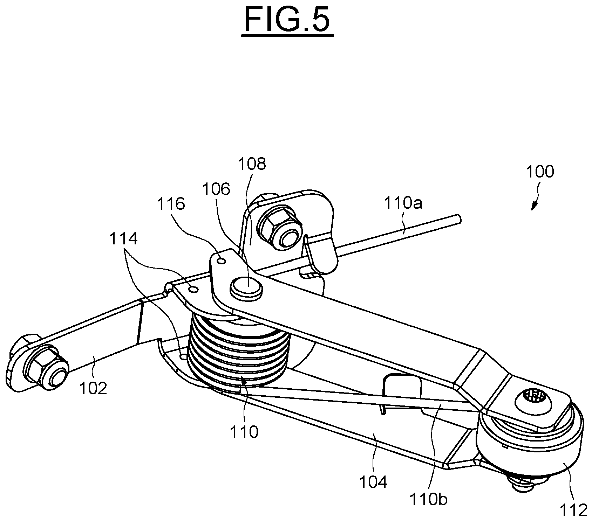

En se référant aux figures 4 et 5, chaque système 100 de redéploiement automatique est fixé dans cet exemple sur la face intérieure 36d du déflecteur associé. Chaque système 100 comprend une embase 102 fixée sur la face intérieure 36d du déflecteur associé, et une partie mobile 104 articulée à rotation sur l'embase autour d'un axe d'articulation 106 vertical.

La partie mobile 104 est mobile à rotation entre une position rabattue dans laquelle elle s'étend le long de la face intérieure 36d du déflecteur associé, et une position déployée visible aux figures 4 et 5. Dans la position déployée, la partie mobile 104 vient en appui contre une butée 108 de l'embase. La butée 108 bloque la rotation de la partie mobile 104 et forme ainsi une butée de fin de course. La partie mobile 104 s'étend horizontalement. Dans l'exemple de réalisation illustré, la partie mobile 104 se présente sous la forme de deux bras espacés l'un de l'autre. Alternativement, il est possible de prévoir d'autres conceptions de la partie mobile.

Pour permettre le passage automatique de la position rabattue à la position déployée de la partie mobile 104, chaque système 100 comprend un ressort 110 interposé entre celle-ci et l'embase 102. Le ressort 110 est enroulé autour de l'axe d'articulation 106 de la partie mobile. Une première extrémité 110a du ressort est fixée sur l'embase 102 et une seconde première extrémité 110b opposée est fixée sur la partie mobile 104.

La partie mobile 104 est équipée d'une roulette 112 montée libre à rotation autour d'un axe vertical (non référencé). La roulette 112 est supportée par la partie mobile 104 et est en saillie par rapport à celle-ci.

Chaque système 100 comprend encore un organe de verrouillage (non représenté) par exemple un pion amovible apte à venir se loger dans des évidements 114, 116 de l'embase 102 et de la partie mobile 104 dans la position rabattue de celle-ci dans laquelle ces évidements sont alignés verticalement. L'organe de verrouillage permet de rendre inactif le système 100.

En référence aux figures 6 à 9, on va maintenant décrire le déploiement du déflecteur 38 relativement à la porte arrière 32 dans la position fermée de ladite porte. Ce déploiement va être décrit en prenant en considération un seul des systèmes d'accouplement 44 étant entendu que le fonctionnement des autres systèmes d'accouplement est similaire.

Dans la position rabattue du déflecteur 38 qui est illustrée à la figure 6, celui-ci est plaqué contre la porte arrière 32. Les bielles 50, 52 s'étendent transversalement le long de la porte arrière 32 et sont parallèles. La roulette 112 du système de redéploiement automatique est en appui contre la porte arrière 32. La partie mobile 104 du système est dans sa position rabattue. Dans cette position, le ressort 110 est précontraint.

Dans cette position rabattue, l'organe de verrouillage rendant inactif le système 100 est retiré par l'opérateur. L'effort de précontrainte exercé par le ressort 110 du système de redéploiement automatique provoque alors le pivotement de la partie mobile 104 autour de l'axe d'articulation 106 dans le sens horaire et le roulement vers l'intérieur en considérant le sens transversal de la roulette 112 le long de la porte arrière 38 comme cela est illustré à la figure 7. Il se produit simultanément un pivotement angulaire des bielles 50 et 52 relativement au déflecteur 38 autour des axes d'articulation 62, 64 et 56, 58. Le déflecteur 38 s'écarte de la porte arrière 32.

La partie mobile 104 pivote et la roulette 112 roule le long de la porte arrière 38 jusqu'à ce que la partie mobile vienne en appui contre la butée de l'embase comme illustré à la figure 7. Le déflecteur 38 est alors dans une position déployée intermédiaire. A partir de cette position déployée intermédiaire, le système 100 n'est plus actif.

Dans cette position déployée intermédiaire du déflecteur 38 avec rotation des bielles 50 et 52, la position neutre du vérin d'actionnement 54 du système d'accouplement a été dépassée. Par « position neutre », on entend la position dans laquelle l'axe d'articulation 72 du vérin d'actionnement est aligné sur l'axe d'allongement de la bielle 50 qui passe par les axes d'articulation 62, 64. Le vérin d'actionnement 54 est articulé de sorte que sa position neutre a été dépassée lorsque la partie mobile 104 du système de redéploiement est en appui contre la butée de l'embase 102.

L'effort de poussée exercé par la tige 70 du vérin d'actionnement assure la poursuite du déploiement automatique du déflecteur 38 (figure 8), la roulette 112 s'éloignant de la porte arrière 38. Le déploiement automatique est réalisé jusqu'à ce que la bielle 52 vienne en butée contre la platine 48 dans la position illustrée à la figure 9.

Dans cet exemple de réalisation, la position déployée du déflecteur 38 est donc définie par le contact entre la platine 48 et la bielle 52 lors de la rotation de celle-ci. Le système d'accouplement 44 est configuré de sorte que dans la position déployée du déflecteur 38, le vérin d'actionnement 54 exerce toujours un effort de poussée sur la bielle 50. Autrement dit, dans cette position déployée du déflecteur, la tige 70 du vérin n'est pas en fin de course et exerce un effort de poussée tendant à maintenir le déflecteur 38 dans sa position déployée. Ainsi, on limite sur le déflecteur 38 les effets liés aux vibrations lors du roulage.

Comme indiqué précédemment, dans l'exemple de réalisation illustré, la position déployée du déflecteur 38 est définie par le contact entre la platine 48 et la bielle 52 lors de la rotation de celle-ci. Alternativement, le blocage du pivotement des bielles 50, 52 pourrait être obtenu par d'autres moyens. Par exemple, la position déployée du déflecteur 38 pourrait être définie par la fin de course du vérin d'actionnement 54. Cependant, cette solution est moins avantageuse dans la mesure où le déflecteur 38 serait plus sujet aux effets liés aux vibrations lors du roulage.

Dans la position déployée du déflecteur 38, sa face extérieure 38c est située dans le prolongement longitudinal de la face extérieure du flanc 14. La face extérieure 38c forme une face déflectrice du déflecteur qui, lors du roulage, prolonge le guidage du flux d'air s'écoulant le long du flanc 14 vers l'arrière. La face supérieure 38c du déflecteur est de forme convexe, i.e. arrondie vers l'extérieur, de sorte à guider le flux d'air vers l'intérieur.

Dans la position déployée du déflecteur 38, les roulettes 42 sont en appui contre un des montants verticaux 24 du cadre arrière. Alternativement, il serait possible de prévoir qu'aucun contact n'existe entre d'une part le déflecteur 38 et d'autre part le cadre arrière 22 ou encore le flanc 14 de la carrosserie dans cette position déployée du déflecteur.

En référence aux figures 9 à 15, on va maintenant décrire le mouvement d'ouverture de la porte arrière 32 dans la position déployée du déflecteur 38.

A partir de la position fermée de la porte arrière 32 illustrée à la figure 9, l'opérateur fait pivoter la porte autour de son axe 34 d'articulation dans le sens horaire. Dans l'exemple de réalisation illustré, lorsque la porte arrière 32 a pivoté de 90° dans le sens horaire et s'étend vers l'arrière comme cela est illustré à la figure 10, les roulettes 42 ne sont plus en appui contre le montant vertical 24 du cadre arrière. Dans cette position, l'axe de chaque roulette 42 et l'axe 34 d'articulation sont ici situés dans un même plan transversal vertical.

Lorsque l'opérateur continue de faire pivoter la porte arrière 32 dans le sens horaire, chaque roulette 42 du déflecteur vient en appui contre le montant vertical 24 du cadre arrière comme cela est illustré à la figure 11. Dans l'exemple de réalisation illustré, ce contact entre les roulettes 42 et le montant vertical 24 intervient pour un angle d'ouverture de la porte arrière 32 de l'ordre de 125°. En variante, il est possible de prévoir des valeurs d'angle d'ouverture différentes pour obtenir cette mise en contact. Par ailleurs, il est aussi possible d'avoir une mise en contact des roulettes 42 contre le flanc 14, et non contre le montant vertical 24 du cadre arrière.

Dans l'exemple de réalisation illustré, le contact qui intervient entre chaque roulette 42 et le montant vertical 24 est décalé vers l'avant dans le sens longitudinal par rapport à l'axe 34 d'articulation de la porte arrière 32. Lors du contact, le déflecteur 38 est aussi décalé vers l'avant par rapport à l'axe 34 d'articulation.

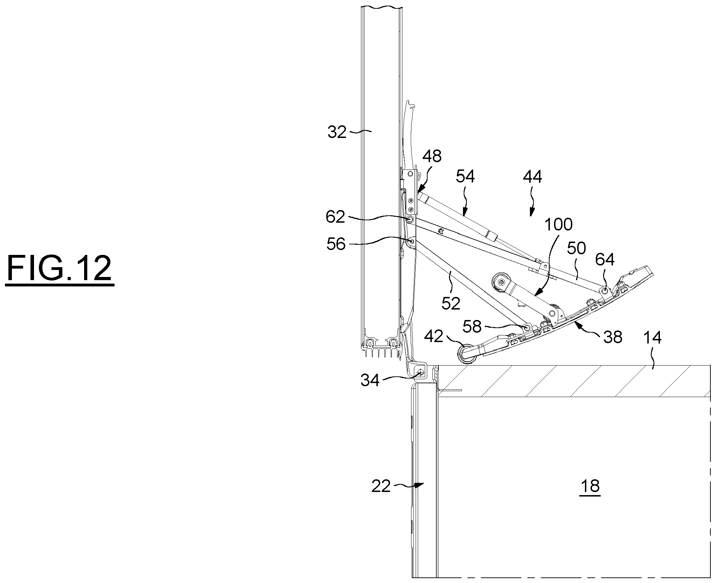

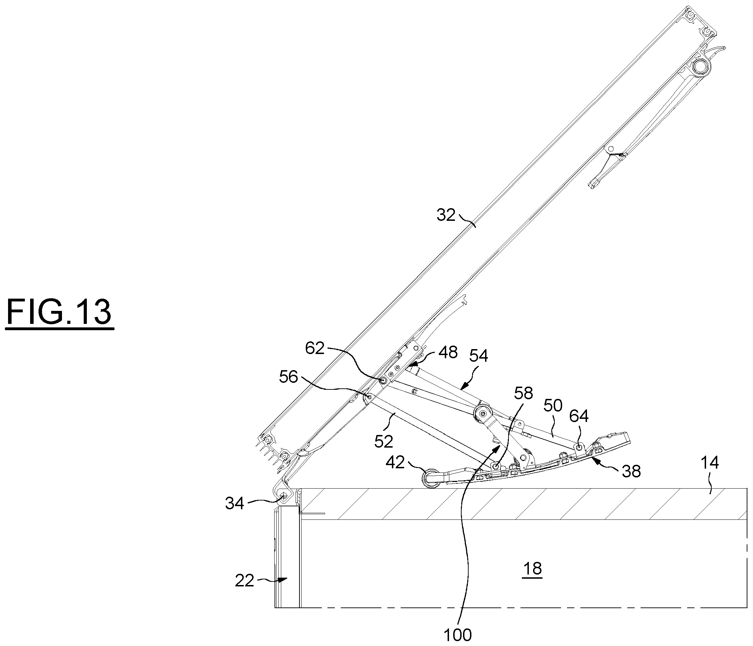

Lorsque l'opérateur poursuit le mouvement d'ouverture de la porte arrière 32 dans le sens horaire après contact de chaque roulette 42 contre le montant vertical 24 du cadre arrière, celle-ci roule vers l'avant le long du flanc 14 et les bielles 52, 50 pivotent autour de leurs axes d'articulation 56, 72 dans le sens anti-horaire comme cela est illustré aux figures 12 et 13. Il se produit également un pivotement angulaire des bielles 50, 52 relativement au déflecteur 38 autour des axes d'articulation 58, 64.

Lors de la poursuite du mouvement d'ouverture de la porte arrière 32 après que chaque roulette 42 soit venue en appui contre le montant vertical 24 du cadre arrière, ce contact se déplace donc vers l'avant le long du flanc 14 de la carrosserie.

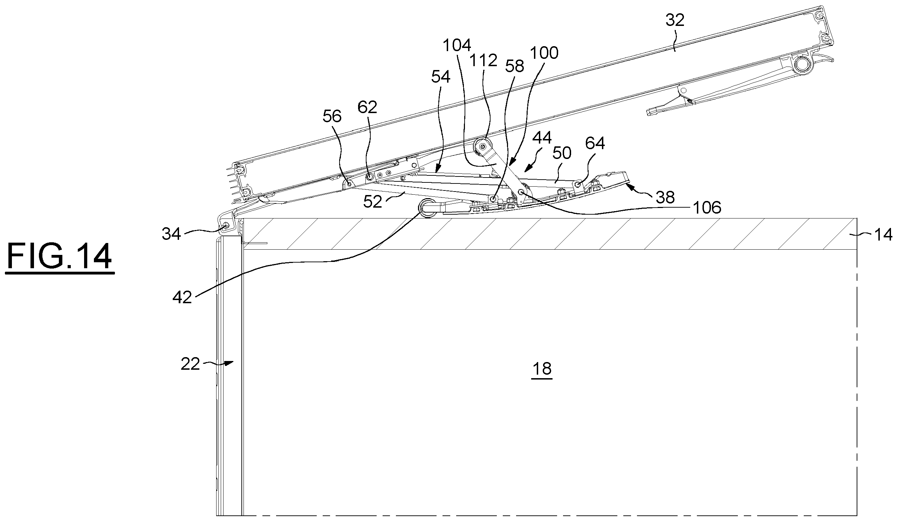

Comme illustré aux figures 14 et 15, lors de la poursuite du mouvement d'ouverture de la porte arrière 32 jusqu'à sa position ouverte extrême rabattue contre le flanc 14, chaque roulette 42 continue de rouler le long du flanc 14 et les bielles 50, 52 continuent de pivoter dans le sens antihoraire jusqu'à ce que le déflecteur 38 soit dans sa position rabattue contre la porte arrière. Le pivotement angulaire des bielles 50, 52 relativement au déflecteur 38 se poursuit également.

Lors de cette poursuite du mouvement d'ouverture de la porte arrière 32 jusqu'à sa position ouverte extrême, la roulette 112 vient en appui contre la porte arrière 38 et roule vers l'arrière le long de celle-ci, ce qui provoque le pivotement de la partie mobile 104 autour de l'axe d'articulation 106 dans le sens anti-horaire. La partie mobile 104 pivote jusqu'à revenir dans sa position rabattue le long de la face intérieure du déflecteur 38. Le ressort 110 est ainsi de nouveau précontraint.

Lorsque les déflecteurs 36, 38 sont en position déployée et que l'opérateur souhaite ouvrir les portes arrière 30, 32 et les rabattre contre les flancs 14 par exemple avant la mise à quai, le retour des déflecteurs 36, 38 dans leur position rabattue s'effectue automatiquement, i.e. sans action spécifique de l'opérateur sur ces déflecteurs.

Lorsque l'opérateur referme ensuite les portes arrière 30 et 32, les déflecteurs 36, 38 passent également automatiquement de leur position rabattue à leur position déployée.

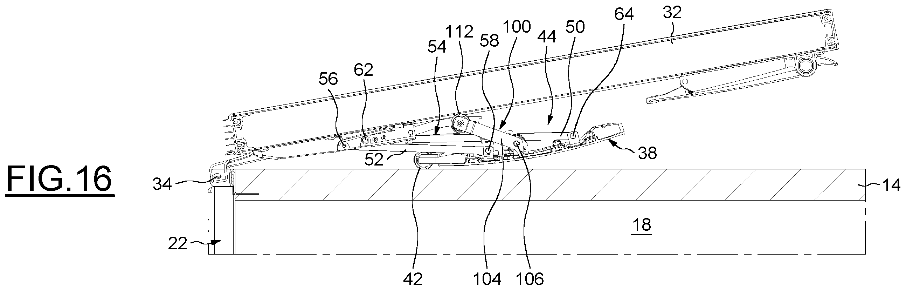

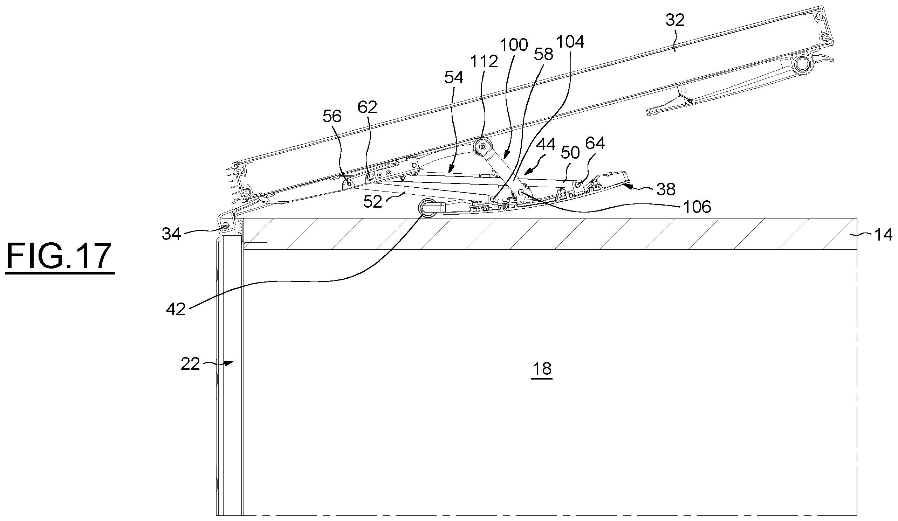

En effet, à partir de la position ouverte extrême de la porte arrière 32 illustrée à la figure 15 lorsque l'opérateur commence à pivoter la porte autour de son axe 34 d'articulation dans le sens anti-horaire, l'effort de précontrainte exercé par le ressort 110 du système de redéploiement automatique provoque le pivotement de la partie mobile 104 autour de l'axe d'articulation 106 dans le sens horaire et le roulement de la roulette 112 vers l'avant le long de la porte arrière 38 comme cela est illustré aux figures 16 et 17. Simultanément, chaque roulette 42 du déflecteur roule vers l'arrière le long du flanc 14 de la carrosserie. Il se produit également un pivotement des bielles 50 et 52 relativement au déflecteur 38 autour des axes d'articulation 62, 64 et 56, 58.

La partie mobile 104 pivote et la roulette 112 roule le long de la porte arrière 38 jusqu'à ce que la partie mobile vienne en appui contre la butée de l'embase. Le déflecteur 38 est alors dans sa position déployée intermédiaire.

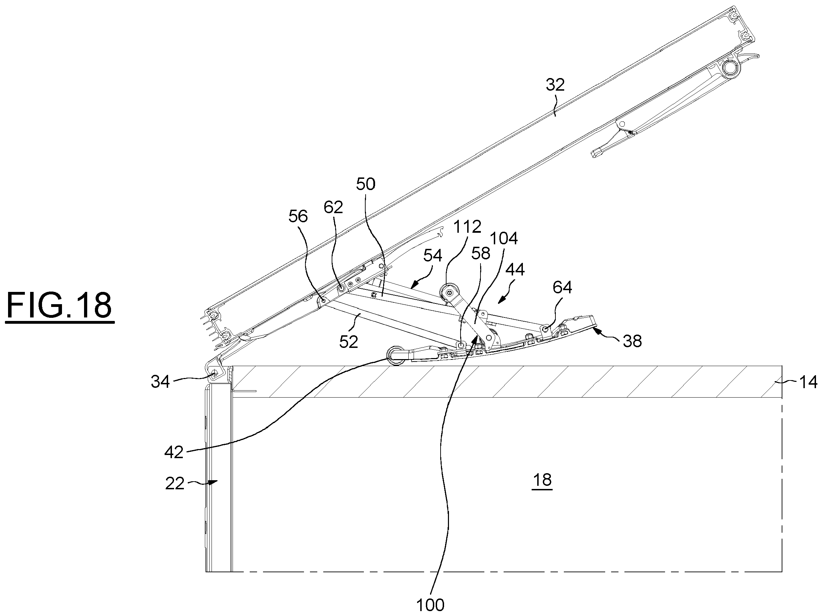

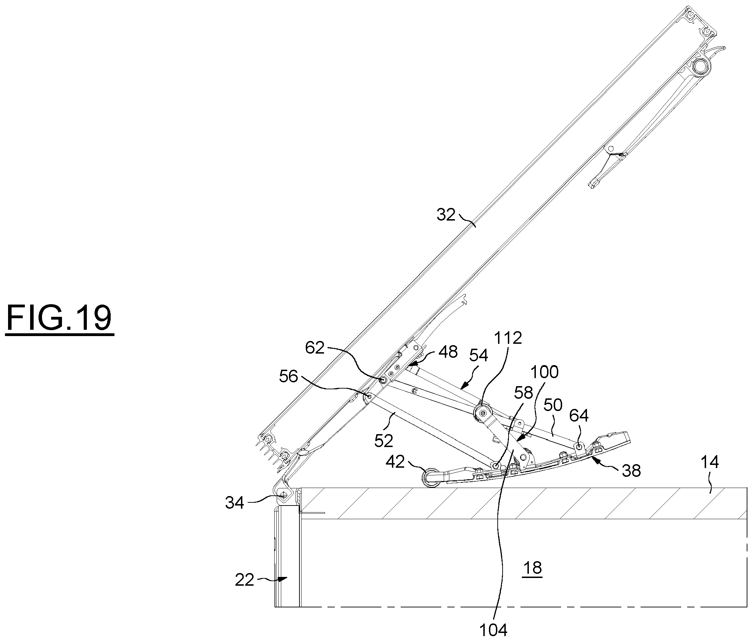

Lorsque l'opérateur poursuit le mouvement de fermeture de la porte arrière 32 dans le sens anti-horaire à partir de la position déployée intermédiaire du déflecteur 38, le vérin d'actionnement 54 assure la poursuite du déploiement automatique du déflecteur 38 (figures 18 et 19), la roulette 112 s'éloignant de la porte arrière 38. Chaque roulette 42 du déflecteur continue de rouler vers l'arrière le long du flanc 14 de la carrosserie et les bielles continuent de pivoter autour des axes d'articulation 62, 64 et 56, 58.

Lorsque la porte arrière 32 a pivoté de 90° dans le sens anti-horaire et s'étend transversalement vers l'extérieur comme cela est illustré à la figure 20, les roulettes 42 du déflecteur sont encore en appui contre le flanc 14 de la carrosserie.

L'opérateur poursuit le mouvement de fermeture de la porte arrière 32 jusqu'à l'amener dans sa position fermée illustrée à la figure 21 avec le déflecteur 38 dans sa position déployée.

L'invention a été illustrée sur la base d'un agencement particulier des systèmes 100 de redéploiement automatique associés aux déflecteurs arrière. Dans l'exemple de réalisation illustré, l'embase 102 de chaque système est fixée sur la face intérieure du déflecteur associé et la roulette vient en contact et rouler sur la porte arrière associée. En variante, selon un autre agencement, il est possible de fixer l'embase 102 de chaque système sur la porte arrière associée et la roulette vient en contact et rouler sur la face intérieure du déflecteur associé.

Par ailleurs, dans l'exemple de réalisation illustré, le vérin d'actionnement de chaque système d'accouplement est articulé pour exercer un effort de poussée à partir d'une position du déflecteur qui est proche et en amont de sa position déployée intermédiaire. Alternativement, il est possible de prévoir un autre agencement du vérin par exemple pour qu'il exerce son effort de poussée uniquement à partir de la position déployée intermédiaire du déflecteur, ou encore dès le déplacement du déflecteur de sa position rabattue.

Par ailleurs, dans l'exemple de réalisation illustré, la partie mobile 104 de chaque système de redéploiement automatique est articulée à rotation sur l'embase autour de l'axe d'articulation 106 qui est orienté verticalement.

Alternativement, il est possible de prévoir d'autres orientations pour l'axe d'articulation 106.

L'axe d'articulation 106 peut par exemple être orienté horizontalement. Dans ce cas, la roulette 112 du système de redéploiement oscille verticalement et roule ou glisse vers l'avant le long de la porte arrière associée ou du déflecteur lors du mouvement de fermeture de la porte arrière associée à partir de sa position ouverte extrême. L'axe d'articulation 106 peut encore être orienté de sorte à être incliné par rapport aux directions horizontale et verticale.

Dans l'exemple de réalisation illustré, il est représenté un agencement particulier des bielles 50, 52 des systèmes d'accouplement associés aux déflecteurs arrière. Chaque bielle 50, 52 est articulée à rotation sur le déflecteur et sur la porte arrière. En variante, selon un autre agencement, il est possible d'articuler la deuxième bielle 52 sur la première bielle 50 et sur le déflecteur associé. Avec un tel agencement, l'axe d'articulation de la bielle 52 sur la bielle 50 est monté avec possibilité de coulissement le long de la bielle 50, par exemple à l'intérieur d'une rainure oblongue de ladite bielle 50. Par ailleurs, dans l'exemple de réalisation illustré, le vérin d'actionnement 54 est articulé sur la bielle de plus grande longueur. Alternativement, le vérin d'actionnement pourrait être articulé sur l'autre bielle.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Carrosserie de véhicule routier de transport de marchandises comprenant deux flancs (14) verticaux, un pavillon (16), et un plancher (18) assemblés entre eux et délimitant en partie un espace de chargement intérieur, et un cadre arrière (22) de renfort fixé au moins sur les flancs (14), des montants verticaux (24) dudit cadre arrière et lesdits flancs (14) formant des parois latérales de la carrosserie, ladite carrosserie comprenant en outre :
- deux portes arrière (30, 32) de fermeture d'un accès audit espace de chargement intérieur mobiles à rotation chacune sur le cadre arrière (22) entre une position fermée et une position ouverte extrême dans laquelle elle s'étend vers l'avant en étant espacée transversalement d'un des flancs (14),
- deux déflecteurs (36, 38) montés chacun sur l'une des portes arrière (30, 32),
- au moins un système d'accouplement (44) de chaque déflecteur à la porte arrière associée pour le montage mobile dudit déflecteur entre une position rabattue contre ladite porte arrière et une position déployée pour prolonger vers l'arrière l'une des parois latérales de la carrosserie, chaque système d'accouplement comprenant au moins une première bielle (50) articulée audit déflecteur et à ladite porte arrière, une deuxième bielle (52) articulée audit déflecteur et à ladite porte arrière ou à ladite première bielle, et un vérin d'actionnement (54) articulé à ladite porte arrière et à l'une des première et deuxième bielles (50, 52), **caractérisée en ce que** la carrosserie comprend en outre :
- au moins un système de redéploiement (100) automatique de chaque déflecteur qui est fixé sur ledit déflecteur ou sur la porte arrière associée, chaque système de redéploiement comprenant une embase (102) fixée sur ledit déflecteur ou sur la porte arrière associée, une partie mobile (104) articulée à rotation sur l'embase entre une position rabattue et une position déployée, et un ressort (110) interposé entre l'embase (102) et la partie mobile (104) et exerçant un effort de précontrainte sur la partie mobile pour obtenir, en position rabattue dudit déflecteur contre la porte arrière associée et lors du mouvement de fermeture de la porte arrière associée à partir de sa position ouverte extrême, un déplacement dudit déflecteur relativement à la porte arrière associée jusqu'à une position déployée intermédiaire sous l'effet dudit effort de précontrainte et du déplacement, vers l'avant le long de la porte arrière associée ou dudit déflecteur, d'un contact entre la partie mobile (104) du système de redéploiement et la porte arrière associée ou ledit déflecteur,
- dans laquelle le vérin d'actionnement (54) de chaque système d'accouplement est articulé pour exercer, au moins à partir de la position déployée intermédiaire du déflecteur associé, un effort de poussée tendant à déplacer ledit déflecteur jusqu'à la position déployée.

2. Carrosserie selon la revendication 1, dans laquelle la partie mobile (104) de chaque système de redéploiement automatique est articulée autour d'un axe (106) d'articulation vertical.

3. Carrosserie selon la revendication 1, dans laquelle la partie mobile (104) de chaque système de redéploiement automatique est articulée autour d'un axe (106) d'articulation horizontal.

4. Carrosserie selon l'une quelconque des revendications précédentes, dans laquelle la partie mobile (104) de chaque système de redéploiement automatique est équipée d'au moins une roulette (112) pour ledit contact avec la porte arrière associée ou ledit déflecteur.

5. Carrosserie selon l'une quelconque des revendications précédentes, dans laquelle :
- le ressort (110) de chaque système de redéploiement automatique est apte à exercer, dans la position rabattue dudit déflecteur contre la porte arrière associée elle-même dans sa position fermée, un effort de précontrainte permettant le déplacement dudit déflecteur relativement à la porte arrière associée jusqu'à la position déployée intermédiaire sous l'effet dudit effort de précontrainte et du déplacement, transversalement vers l'intérieur le long de la porte arrière associée ou dudit déflecteur, d'un contact entre la partie mobile (104) du système de redéploiement et la porte arrière associée ou ledit déflecteur, et dans laquelle
- le vérin d'actionnement (54) de chaque système d'accouplement est articulé pour exercer, au moins à partir de la position déployée intermédiaire du déflecteur associé, un effort de poussée tendant à déplacer ledit déflecteur jusqu'à la position déployée.

6. Carrosserie selon l'une quelconque des revendications précédentes, dans laquelle ledit système de redéploiement (100) automatique comprend en outre un organe de verrouillage à actionnement manuel apte à coopérer avec les parties fixe et mobile (102, 104) dans la position rabattue de ladite partie mobile pour le verrouillage dudit système.

7. Carrosserie selon l'une quelconque des revendications précédentes, dans laquelle lesdites première et deuxième bielles (50, 52) de chaque système d'accouplement sont articulées pour obtenir, en position déployée du déflecteur (36, 38) associé et lors du mouvement d'ouverture de la porte arrière associée vers sa position ouverte extrême, un déplacement dudit déflecteur relativement à la porte arrière associée vers sa position rabattue sous l'effet du déplacement, vers l'avant le long d'une des parois latérales de la carrosserie, d'un contact entre ledit déflecteur et ladite paroi latérale.

8. Carrosserie selon la revendication 7, dans laquelle lesdites première et deuxième bielles (50, 52) de chaque système d'accouplement sont articulées pour obtenir, en position déployée du déflecteur (36, 38) associé et lors du mouvement d'ouverture de la porte arrière associée vers sa position ouverte extrême, un contact entre ledit déflecteur et ladite paroi latérale, et lors de la poursuite dudit mouvement d'ouverture après contact, le déplacement dudit contact vers l'avant le long de ladite paroi latérale.

9. Carrosserie selon la revendication 7, dans laquelle lesdites première et deuxième bielles (50, 52) de chaque système d'accouplement sont articulées pour obtenir, en position déployée du déflecteur (36, 38) associé, un contact entre ledit déflecteur et ladite paroi latérale, et lors du mouvement d'ouverture de la porte arrière associée vers sa position ouverte extrême le déplacement dudit contact vers l'avant le long de ladite paroi latérale.

10. Carrosserie selon l'une quelconque des revendications 7 à 9, dans laquelle chaque déflecteur (36, 38) est équipé d'au moins une roulette (40, 42) pour ledit contact avec ladite paroi latérale.

11. Carrosserie selon l'une quelconque des revendications précédentes, dans laquelle chaque porte arrière (30, 32) est montée mobile à rotation sur un des montants verticaux (24) du cadre arrière, le déflecteur (36, 38) associé à ladite porte étant décalé vers l'arrière par rapport audit montant vertical (24) dans la position déployée dudit déflecteur.

## Patentansprüche

1. Karosserie eines Straßenfahrzeugs zum Transport von Gütern, die zwei vertikalen Flanken (14), ein Dach (16) und einen Boden (18), die zusammengebaut sind und einen inneren Laderaum teilweise begrenzen, sowie einen hinteren Verstärkungsrahmen (22), der zumindest an den Flanken (14) befestigt ist, und vertikale Pfosten (24) des hinteren Rahmens umfasst, und wobei die Flanken (14) die Seitenwände der Karosserie bilden, wobei die Karosserie ferner Folgendes umfasst:
- zwei hintere Türen (30, 32) zum Verschließen des Zugangs zum inneren Laderaum, die jeweils am hinteren Rahmen (22) zwischen einer geschlossenen Position und einer äußersten geöffneten Position drehbeweglich sind, in der sie sich nach vorne erstreckt und quer von einer der Flanken (14) beabstandet ist,
- zwei Ablenkplatten (36, 38), die jeweils an einer der hinteren Türen (30, 32) montiert sind,
- mindestens ein Kopplungssystem (44) für jede Ablenkplatte an der zugehörigen hinteren Tür zur beweglichen Montage der Ablenkplatten zwischen einer an der hinteren Tür eingeklappten Position und einer ausgeklappten Position, um sich in Heckrichtung der einen der Seitenwände der Karosserie zu erstrecken, wobei jedes Kopplungssystem mindestens eine erste Verbindungsstange (50), die mit der Ablenkplatte und mit der hinteren Tür gelenkig verbunden ist, eine zweite Verbindungsstange (52), die mit der Ablenkplatte und mit der hinteren Tür oder mit der ersten Verbindungsstange gelenkig verbunden ist, und eine Betätigungszylinder (54) umfasst, der mit der hinteren Tür und mit einer der ersten und der zweiten Verbindungsstange (50, 52) gelenkig verbunden ist, **dadurch gekennzeichnet, dass** die Karosserie ferner Folgendes umfasst:
- mindestens ein automatisches Umverteilungssystem (100) für jede Ablenkplatte, das an der Ablenkplatte oder an der zugehörigen hinteren Tür befestigt ist, wobei jedes Umverteilungssystem eine Basis (102), die an der Ablenkplatte oder an der zugehörigen hinteren Tür befestigt ist, ein bewegliches Teil (104), das drehbar mit der Basis zwischen einer eingeklappten Position und einer ausgeklappten Position gelenkig verbunden ist, und eine Feder (110) umfasst, die zwischen der Basis (102) und dem beweglichen Teil (104) eingefügt ist und eine Vorspannkraft auf das bewegliche Teil ausübt, um in der eingeklappten Position der Ablenkplatte gegen die zugehörige hintere Tür und während der Schließbewegung der zugehörigen hinteren Tür ausgehend von ihrer äußersten geöffneten Position eine Verschiebung der Ablenkplatte im Verhältnis zur zugehörigen hinteren Tür bis zu einer ausgeklappten Zwischenposition unter der Wirkung der Vorspannkraft und der Verschiebung nach vorne entlang der zugehörigen hinteren Tür oder der Ablenkplatte einen Kontakts zwischen dem beweglichen Teil (104) des Umverteilungssystems und der zugehörigen hinteren Tür oder der Ablenkplatte zu erhalten,
- bei der der Betätigungszylinder (54) jedes Kopplungssystems gelenkig ist, um zumindest von der ausgeklappten Zwischenposition der zugehörigen Ablenkplatte eine Schubkraft auszuüben, die darauf abzielt, die Ablenkplatte in die ausgeklappte Position zu verschieben.

2. Karosserie nach Anspruch 1, bei der das bewegliche Teil (104) jedes automatischen Umverteilungssystems um eine vertikale Gelenkachse (106) gelenkig ist.

3. Karosserie nach Anspruch 1, bei der das bewegliche Teil (104) jedes automatischen Umverteilungssystems um eine horizontale Gelenkachse (106) gelenkig ist.

4. Karosserie nach einem der vorhergehenden Ansprüche, bei der das bewegliche Teil (104) jedes automatischen Umverteilungssystems mit mindestens einer Rolle (112) für den Kontakt mit der zugehörigen hinteren Tür oder der Ablenkplatte ausgestattet ist.

5. Karosserie nach einem der vorhergehenden Ansprüche, bei der:
- die Feder (110) jedes automatischen Umverteilungssystems dazu ausgelegt ist, in der eingeklappten Position der Ablenkplatte gegen die zugehörige hintere Tür selbst in deren geschlossener Position eine Vorspannkraft auszuüben, die die Verschiebung der Ablenkplatte im Verhältnis zu der zugehörigen hinteren Tür bis zu der ausgeklappten Zwischenposition unter der Wirkung der Vorspannkraft und der Verschiebung eines Kontakts zwischen dem beweglichen Teil (104) des Umverteilungssystems und der zugehörigen hinteren Tür oder der Ablenkplatte quer nach innen entlang der zugehörigen hinteren Tür oder der Ablenkplatte ermöglicht, und bei der
- der Betätigungszylinder (54) jedes Kopplungssystems gelenkig ist, um zumindest von der ausgeklappten Zwischenposition der zugehörigen Ablenkplatte ausgehend eine Schubkraft auszuüben, die darauf abzielt, die Ablenkplatte in die ausgeklappte Position zu verschieben.

6. Karosserie nach einem der vorhergehenden Ansprüche, bei der das automatische Umverteilungssystem (100) ferner ein manuell betätigtes Verriegelungselement umfasst, das dazu ausgelegt ist, in der eingeklappten Position des beweglichen Teils mit den festen und beweglichen Teilen (102, 104) zum Verriegeln des Systems zusammenzuwirken.

7. Karosserie nach einem der vorhergehenden Ansprüche, bei der die erste und die zweite Verbindungsstange (50, 52) jedes Kopplungssystems gelenkig miteinander verbunden sind, um in der ausgeklappten Position der zugehörigen Ablenkplatte (36, 38) und während der Öffnungsbewegung der zugehörigen hinteren Tür in Richtung ihrer äußersten geöffneten Position eine Verschiebung der Ablenkplatte im Verhältnis zur zugehörigen hinteren Tür in Richtung ihrer eingeklappten Position unter der Wirkung der Verschiebung eines Kontakts zwischen der Ablenkplatte und der Seitenwand nach vorne entlang einer der Seitenwände der Karosserie zu erhalten.

8. Karosserie nach Anspruch 7, bei der die erste und die zweite Verbindungsstange (50, 52) jedes Kopplungssystems gelenkig miteinander verbunden sind, um in der ausgeklappten Position der zugehörigen Ablenkplatte (36, 38) und während der Öffnungsbewegung der zugehörigen hinteren Tür in Richtung ihrer äußersten geöffneten Position einen Kontakt zwischen der Ablenkplatte und der Seitenwand und während der Fortsetzung der Öffnungsbewegung nach dem Kontakt die Verschiebung des Kontakts nach vorne entlang der Seitenwand zu erhalten.

9. Karosserie nach Anspruch 7, bei der die erste und die zweite Verbindungsstange (50, 52) jedes Kopplungssystems gelenkig miteinander verbunden sind, um in der ausgeklappten Position der zugehörigen Ablenkplatte (36, 38) einen Kontakt zwischen der Ablenkplatte und der Seitenwand und während der Öffnungsbewegung der zugehörigen hinteren Tür in Richtung ihrer äußersten geöffneten Position die Verschiebung des Kontakts nach vorne entlang der Seitenwand zu erhalten.

10. Karosserie nach einem der Ansprüche 7 bis 9, bei der jede Ablenkplatte (36, 38) mit mindestens einer Rolle (40, 42) für den Kontakt mit der Seitenwand ausgestattet ist.

11. Karosserie nach einem der vorhergehenden Ansprüche, bei der jede hintere Tür (30, 32) drehbeweglich an einem der vertikalen Pfosten (24) des hinteren Rahmens montiert ist, wobei die der Tür zugehörige Ablenkplatte (36, 38) in der ausgeklappten Position der Ablenkplatte im Verhältnis zum vertikalen Pfosten (24) nach hinten versetzt ist.

## Claims

1. A bodywork of a road freight transport vehicle comprising two vertical flanks (14), a roof (16), and a floor (18) assembled together and partially delimiting an interior loading space, and a rear reinforcement frame (22) fixed at least on the flanks (14), the vertical uprights (24) of said rear frame and said flanks (14) forming side walls of the bodywork, said bodywork further comprising:
- two rear doors (30, 32) for closing access to said interior loading space, each rotatable on the rear frame (22) between a closed position and an extreme open position wherein it extends forward while being spaced transversely from one of the flanks (14),
- two deflectors (36, 38) each mounted on one of the rear doors (30, 32),
- at least one system (44) for coupling each deflector to the associated rear door for the movable mounting of said deflector between a folded position against said rear door and a deployed position to extend towards the rear one of the side walls of the bodywork, each coupling system comprising at least a first connecting rod (50) articulated to said deflector and to said rear door, a second connecting rod (52) articulated to said deflector and to said rear door or to said first connecting rod, and an actuation cylinder (54) articulated to said rear door and to one of the first and second connecting rods (50, 52), **characterised in that** the bodywork further comprises:
- at least one automatic redeployment system (100) for each deflector which is fixed on said deflector or on the associated rear door, each redeployment system comprising a base (102) fixed on said deflector or on the associated rear door, a movable part (104) rotatably articulated on the base between a folded position and an deployed position, and a spring (110) interposed between the base (102) and the movable part (104) and exerting a prestressing force on the movable part to obtain, in the folded position of said deflector against the associated rear door and during the closing movement of the associated rear door from its extreme open position, a movement of said deflector relative to the associated rear door up to an intermediate deployed position under the effect of said prestressing force and the movement, forwards along the associated rear door or said deflector, of a contact between the movable part (104) of the redeployment system and the associated rear door or said deflector,
- wherein the actuating cylinder (54) of each coupling system is articulated to exert, at least from the intermediate deployed position of the associated deflector, a thrust force tending to move said deflector to the deployed position.

2. The bodywork according to claim 1, wherein the movable part (104) of each automatic redeployment system is articulated around a vertical articulation axis (106).

3. The bodywork according to claim 1, wherein the movable part (104) of each automatic redeployment system is articulated around a horizontal articulation axis (106).

4. The bodywork according to any one of the preceding claims, wherein the movable part (104) of each automatic redeployment system is equipped with at least one caster (112) for said contact with the associated rear door or said deflector.

5. The bodywork according to any one of the preceding claims, wherein:
- the spring (110) of each automatic redeployment system is able to exert, in the folded position of said deflector against the associated rear door itself in its closed position, a prestressing force allowing the movement of said deflector relative to the associated rear door up to the intermediate deployed position under the effect of said prestressing force and the movement, transversely inwards along the associated rear door or said deflector, of a contact between the movable part (104) of the redeployment system and the associated rear door or said deflector, and wherein
- the actuating cylinder (54) of each coupling system is articulated to exert, at least from the intermediate deployed position of the associated deflector, a thrust force tending to move said deflector to the deployed position.

6. The bodywork according to any one of the preceding claims, wherein said automatic redeployment system (100) further comprises a manually actuated locking member capable of cooperating with the fixed and movable parts (102, 104) in the folded position of said movable part for locking said system.

7. The bodywork according to any one of the preceding claims, wherein said first and second connecting rods (50, 52) of each coupling system are articulated to obtain, in the deployed position of the associated deflector (36, 38) and during movement for opening the associated rear door towards its extreme open position, a movement of said deflector relative to the associated rear door towards its folded position under the effect of the movement, forward along one of the side walls of the bodywork, of a contact between said deflector and said side wall.

8. The bodywork according to claim 7, wherein said first and second connecting rods (50, 52) of each coupling system are articulated to obtain, in the deployed position of the associated deflector (36, 38) and during the opening movement of the associated rear door towards its extreme open position, a contact between said deflector and said side wall, and when continuing said opening movement after contact, the movement of said contact forwards along said side wall.

9. The bodywork according to claim 7, wherein said first and second connecting rods (50, 52) of each coupling system are articulated to obtain, in the deployed position of the associated deflector (36, 38), a contact between said deflector and said side wall, and during the opening movement of the associated rear door towards its extreme open position the movement of said contact forwards along said side wall.

10. The bodywork according to any one of claims 7 to 9, wherein each deflector (36, 38) is equipped with at least one roller (40, 42) for said contact with said side wall.

11. The bodywork according to any one of the preceding claims, wherein each rear door (30, 32) is rotatably mounted on one of the vertical uprights (24) of the rear frame, the deflector (36, 38) associated with said door being offset rearwardly relative to said vertical upright (24) in the deployed position of said deflector.
